# EUROPÄISCHE PATENTANMELDUNG

(11) **EP 1 052 118 A2**
(43) Veröffentlichungstag der Anmeldung: **15.11.2000**
(21) Anmeldenummer: 00109497.8
(22) Anmeldetag: 04.05.2000
(51) Int. Cl.: B60C 11/14

(54) **Verfahren und Vorrichtung zur Beeinflussung der Oberflächenhaftung von Fahrzeugreifen, sowie hierfür geeigneter Fahrzeugreifen**

(30) Priorität: 07.05.1999 DE 19920952
(71) Anmelder: Continental Aktiengesellschaft, 30165 Hannover (DE)
(72) Erfinder: Hellweg, Hans-Bernd, 67251 Freinsheim (DE); Glinz, Michael, 31535 Neustadt (DE); Homt, Günter, 30823 Garbsen (DE)

(57) **Zusammenfassung**

Verfahren zur Beeinflussung der Oberflächenhaftung von montierten und im Betriebszustand / Fahrzustand befindlichen Fahrzeugreifen aus Polymermaterialien, insbesondere von Luftreifen für Kraftfahrzeuge, bei dem ein ionisiertes Gas (Plasma) in Oberflächennähe des rollenden und im Betriebszustand befindlichen Fahrzeugreifens erzeugt und so auf einen Bereich der Oberfläche geleitet wird, daß das ionisierte Gas vor dem Eintritt des beaufschlagten Oberflächenbereiches in die Reifenaufstandsfläche auf den Oberflächenbereich einwirkt.

## Beschreibung

Die Erfindung betrifft ein Verfahren zur Beeinflussung der Oberflächenhaftung von montierten und im Betriebszustand / Fahrzustand befindlichen Fahrzeugreifen aus Polymermaterialien, insbesondere von Luftreifen für Kraftfahrzeuge.

Die Haftung eines Fahrzeugreifens als einziges Verbindungsglied zwischen Fahrbahn und Fahrzeug ist naturgemäß von wesentlicher Bedeutung für alle Fahrzustände, beispielsweise zur Seitenführung, zur Lenkung, zur Übertragung von Brems- und Beschleunigungskräften etc.

Insbesondere bei witterungsbedingter Veränderung der Fahrbahn oder des Untergrundes oder bei Beeinflussungen der Haftung durch die Beschaffenheit der Fahrbahnoberflächen, also etwa bei nasser, überfrorener oder vereister Straße, führt der damit üblicherweise einhergehende Haftungsverlust oft zu Sicherheitsrisiken und Unfällen.

Es sind im Stand der Technik verschiedene Maßnahmen bekannt, die eine Erhöhung der Haftung eines Fahrzeugreifens in solchen Fällen bewirken können.

Eine Möglichkeit ist das Anordnen von Spikes oder ähnlichen Halteelementen innerhalb des Laufstreifens von Reifen, was jedoch zu dem Nachteil führt, daß bei trockener Fahrbahn die Fahrbahnbeläge einem erhöhten Verschleiß unterworfen sind.

Eine weitere bekannte Maßnahme besteht darin, Sand oder ähnliche Mittel, auch chemische Substanzen, zur Erhöhung der Haftung während der Fahrt vor den ablaufenden Fahrzeugreifen auf die Fahrbahn zu sprühen. Dies stellt jedoch ein nicht zu vernachlässigendes Problem im Hinblick auf die verbleibende Verunreinigung der Fahrbahn und auf die Entsorgung solcher Materialien dar.

Für die Erfindung bestand also die Aufgabe, ein Verfahren zur Beeinflussung bzw. Erhöhung der Oberflächenhaftung von montierten und im Betriebszustand / Fahrzustand befindlichen Fahrzeugreifen bereitzustellen, welches die oben genannten Nachteile vermeidet.

Gelöst wird diese Aufgabe durch die Merkmale des Hauptanspruchs. Weitere vorteilhafte Ausbildungen sind in den Unteransprüchen dargestellt.

Ebenfalls wird eine Vorrichtung offenbart, die zur Durchführung des erfindungsgemäßen Verfahrens in besonderer Weise geeignet ist, sowie ein entsprechender Fahrzeugreifen.

Hierbei wird ein ionisiertes Gas (Plasma) in Oberflächennähe des rollenden und im Betriebszustand befindlichen Fahrzeugreifens erzeugt und so auf einen Bereich der Oberfläche geleitet wird, daß das ionisierte Gas vor dem Eintritt des beaufschlagten Oberflächenbereiches in die Reifenaufstandsfläche auf den Oberflächenbereich einwirkt.

Durch das Einwirken des ionisierten Gases auf den beaufschlagten Oberflächenbereich treten dort - mehr oder weniger kurzzeitig - verschiedene und in Abhängigkeit von der Art des ionisierten Gases in ihren Anteilen verschieden stark ausgeprägte und haftungserhöhende Effekte einzeln oder in Kombination auf, die im wesentlichen bestehen in
a) einer Reinigung der Reifenoberfläche von organischen Verunreinigungen,
b) einer Ätzung auf mikroskopisch dünnen Bereichen des Oberflächenmateriales des Fahrzeugreifens, wodurch eine schlecht haftende Grenzschicht entfernt wird und die Oberfläche vergrößert wird, wobei auch Mikro-Poren entstehen können,
c) je nach Art des ionisierten Gases und des Oberflächenmateriales in einer Aufspaltung oder auch Verbindung von oberflächennahen Molekülstrukturen und damit in einer Erhöhung der Bindungsmöglichkeiten, beispielsweise durch Depolymerisation (Erzeugung kürzerer Polymerketten, Oligomeren und Monomeren),
d) sowie in einer Modifikation der chemischen Struktur und einer Ionisierung des beaufschlagten Oberflächenmateriales des Fahrzeugreifens, wobei entweder in Reaktion mit dem ionisierten Gas als solchem oder in nachfolgender Reaktion mit der Umgebungsatmosphäre freie Radikale entstehen können, die mit benachbarten Oberflächen hohe Bindungskräfte aufbauen.

Darüberhinaus werden durch ein solches Verfahren Verunreinigungen oder Schäden in der Fahrbahnoberfläche sicher vermieden und durch die relativ kurzzeitige und im Hinblick auf die lediglich in molekularen Bereichen begrenzte Eindringtiefe in die Oberfläche des Fahrzeugreifens bei einer solchen Behandlung die Struktur und Festigkeit des Reifens - auch im Hinblick auf die Lebensdauer - nicht merklich beeinflußt. Die Erhöhung der Haftung ist dabei bei allen Fahrbahnzuständen deutlich, also nicht nur bei nasser, überfrorener oder vereister Straße, sondern auch bei trockener Fahrbahn.

Die Erzeugung eines ionisierten Gases erfolgt dabei in bekannter Weise innerhalb eines Plasmas, beispielsweise innerhalb eines Niederdruckplasmas, üblicherweise durch Energieentladung zwischen zwei Elektroden, wonach die Plasmawolke und damit das Ionisierte Gas mit Hilfe eines Gas-Strömung über eine Düse oder ähnliche Einrichtungen auf einen Bereich der Oberfläche des Fahrzeugreifens geleitet wird. Selbstverständlich können auch andere Arten der Plasmeerzeugung verwendet werden. Selbstverständlich gehört hierzu auch eine Einrichtung zur Bereitstellung der für die Plasmaerzeugungseinrichtung nötigen (Hochspannungs-) Energie.

Das verwendete Plasmagas und / oder auch das Gas für die Leit- oder Transportströmung kann im einfachsten Fall Luft sein, die ggf durch ein Gebläse oder auch durch entsprechende Leiteinrichtungen für den Fahrtwind zur Verfügung gestellt wird.

Eine weitere vorteilhafte Ausbildung des Verfahrens besteht darin, daß das ionisierte Gas abhängig von Fahrzuständen, wie etwa Brems-, Beschleunigungs-, und Lenkungsvorgängen, Kurvenfahrten, etc. erzeugt und auf einen Bereich der Oberfläche geleitet wird, wodurch die Einschaltdauer und der Verschleiß der zugehörigen Aggregate und der Energiebedarf reduziert, der Einfluß des einwirkenden Plasmas auf Struktur und Festigkeit des Reifens weiter vermindert, und die Haftungserhöhung ausschließlich auf real bestehende Gefahrensituationen beschränkt werden.

Eine zur Durchführung des Verfahrens besonders geeignete Vorrichtung zur Beeinflussung der Oberflächenhaftung von montierten und im Betriebszustand / Fahrzustand befindlichen Fahrzeugreifen aus Polymermaterialien, insbesondere von Luftreifen für Kraftfahrzeuge, ist am Fahrzeug angeordnet und beinhaltet im wesentlichen die folgenden Einrichtungen
a) eine in der Nähe der Reifenoberfläche angeordnete Einrichtung zur Erzeugung eines ionisierten Gases mit einer Leiteinrichtung / Düse zur Leitung des Ionisierten Gases auf einen Bereich der Oberfläche, der sich im Hinblick auf das Abrollen des Reifens kurz vor dem Eintritt in die Reifenaufstandsfläche befindet,
b) Abstandsmeß- und Positioniereinrichtungen für die Positionierung der Einrichtung zur Erzeugung eines ionisierten Gases bzw. der Leiteinrichtung / Düse relativ zur Reifenobefläche
c) Sensor- und zugehörige Verabeitungseinrichtungen zur Erfassung der den Fahrzustand repräsentierenden Parameter, wie etwa Raddrehzahlen, Radschlupf, Radstellung, Brems-, Beschleunigungs-, und Lenkungsvorgängen, Kurvenfahrten,
d) ein oder mehrere Speichereinrichtungen für Reifendaten und Referenzwerte für die Fahrzustände, sowie
e) eine Verarbeitungseinrichtung zur Steuerung und Regelung der Erzeugung und der Leitung des ionisierten Gases anhand der erfaßten Parameter und Speicherwerte.

Durch eine solche Ausbildung einer Vorrichtung lassen sich alle zur sicheren Applikation des ionisierten Gases / Plasmas nötigen Steuerungen durchführen, wobei insbesondere durch die Regelung des relativen Abstandes zwischen Erzeugungsort des Plasmas und Reifenoberfläche die einwirkende Energie und die dadurch ausgelösten eingangs genannten Effekte in Wirkung und Dauer kontrolliert werden können.

Bei einem besonders geeigneten Fahrzeugreifen zur Verwendung für ein solches Verfahren weist die äußere Oberfläche des Fahrzeug reifens mindestens in Teilbereichen eine Mischung auf, die eine unter Einwirkung eines ionisierten Gases ausgeprägte Reaktivität besitzt.

Eine gute Eignung im Sinne einer ausgeprägte Reaktivität unter Einwirkung eines ionisierten Gases weist zum Beispiel Naturkautschuk auf, jedoch können auch andere Polymermaterialien durch geeignete Zusätze angepaßt werden.

Die Anordnung solcher Mischungen in Teilbereichen kann etwa dadurch erfolgen, daß lediglich eine umlaufende Teilbreite oder einzelne umlaufende Profil- oder Klotzreihen des Laufstreifens aus der reaktiven Mischung bestehen, was durch heute übliche Extrusionsverfahren leicht herzustellen ist. Weitere Anordnungen, etwa die einer verteilten punktuellen Anordnung (Spots) solcher Mischungen sind ebenfalls möglich. Die übrigen - nicht reaktiven - Bereiche können dann in der Mischung auf andere wünschenswerte Reifeneigenschaften angepaßt werden und z.B. aus Mischungen mit erhöhtem Silica-Anteil bestehen.

Anhand eines Ausführungsbeispieles soll die Erfindung näher erläutert werden.

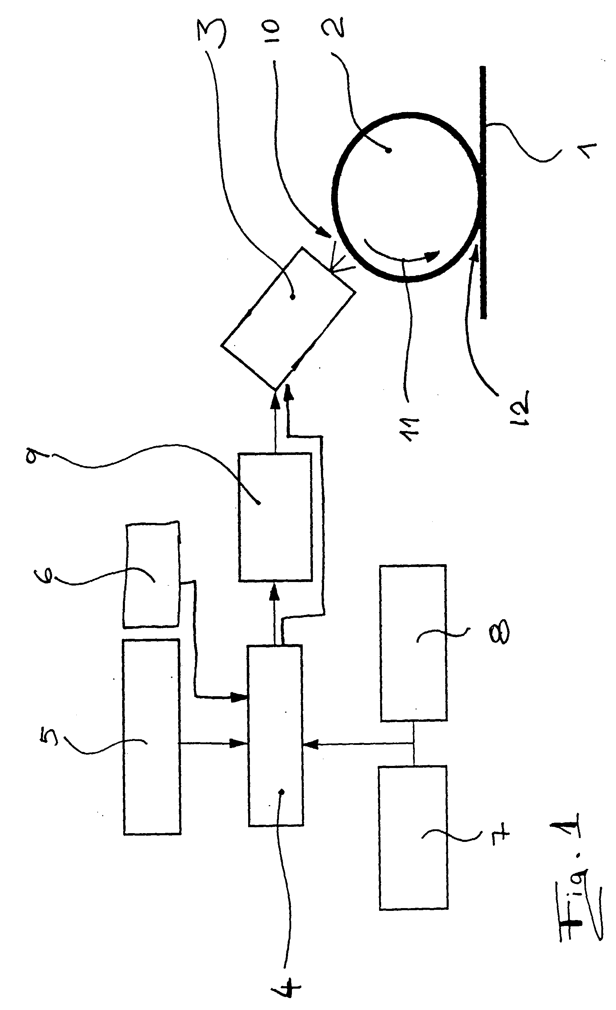

Die Fig. 1 zeigt hierzu in stark schematisierter Darstellung einen auf einer Fahrbahn 1 abrollenden Kraftfahrzeugluftreifen 2, in dessen unmittelbarer Nähe und seinem Außenumfang benachbart ein ein ionisiertes Gas erzeugender Plasmabrenner 3 angeordnet ist, der auch hier nicht näher dargestellte Düsen, Leit- und Positioniereinrichtungen umfaßt.

Eine zentrale Steuer- und Kontrolleinrichtung 4 verarbeitet die über Sensoren eines Anti-Blockier-Systems (ABS) 5 und die über Sensoren eines räumlichen Beschleunigungsmeßsystems 6 erhaltenen und den Fahrzustand repräsentierenden Parameter, wie etwa Raddrehzahlen, Radschlupf, Radstellung, Brems-, Beschleunigungswerte, sowie die in Speicher- und Sensoreinrichtungen 7 und 8 enthaltenen bzw. erzeugten Reifendaten und Referenzwerte für die Fahrzustände, ermittelt daraus Stellsignale und leitet diese weiter an die Energieerzeugungseinrichtung 9 und den Plasmabrenner 3 zur Steuerung und Regelung der Erzeugung und der Leitung des ionisierten Gases anhand der erfaßten Parameter und Speicherwerte.

Der mit ionisiertem Gas zu beaufschlagende Bereich 10 des in Drehrichtung 11 abrollenden Kraftfahrzeugluftreifens 2 befindet sich dabei kurz vor dem Eintritt in die Reifenaufstandsfläche 12.

## Patentansprüche

1. Verfahren zur Beeinflussung der Oberflächenhaftung von montierten und im Betriebszustand / Fahrzustand befindlichen Fahrzeugreifen aus Polymermaterialien, insbesondere von Luftreifen für Kraftfahrzeuge, bei dem ein Ionisiertes Gas (Plasma) in Oberflächennähe des rollenden und im Betriebszustand befindlichen Fahrzeugreifens erzeugt und so auf einen Bereich der Oberfläche geleitet wird, daß das ionisierte Gas vor dem Eintritt des beaufschlagten Oberflächenbereiches in die Reifenaufstandsfläche auf den Oberflächenbereich einwirkt.

2. Verfahren nach Anspruch 1, dadurch gekennzeichnet, daß das ionisierte Gas abhängig von Fahrzuständen, wie etwa Brems-, Beschleunigungs-, und Lenkungsvorgängen, Kurvenfahrten, etc. erzeugt und auf einen Bereich der Oberfläche geleitet wird.

3. Vorrichtung zur Beeinflussung der Oberflächenhaftung von montierten und im Betriebszustand / Fahrzustand befindlichen Fahrzeugreifen aus Polymermaterialien, insbesondere von Luftreifen für Kraftfahrzeuge, wobei die Vorrichtung am Fahrzeug angeordnet ist und im wesentlichen die folgenden Einrichtungen beinhaltet
a) eine in der Nähe der Reifenoberfläche angeordnete Einrichtung zur Erzeugung eines ionisierten Gases mit einer Leiteinrichtung / Düse zur Leitung des ionisierten Gases auf einen Bereich der Oberfläche, der sich im Hinblick auf das Abrollen des Reifens kurz vor dem Eintritt in die Reifenaufstandsfläche befindet,
b) Abstandsmeß- und Positioniereinrichtungen für die Positionierung der Einrichtung zur Erzeugung eines ionisierten Gases bzw. der Leiteinrichtung / Düse relativ zur Reifenobefläche
c) Sensor- und zugehörige Verabeitungseinrichtungen zur Erfassung der den Fahrzustand repräsentierenden Parameter, wie etwa Raddrehzahlen, Radschlupf, Radstellung, Brems-, Beschleunigungs-, und Lenkungsvorgängen,
d) ein oder mehrere Speichereinrichtungen für Reifendaten und Referenzwerte für die Fahrzustände, sowie
e) eine Verarbeitungseinrichtung zur Steuerung und Regelung der Erzeugung und der Leitung des Ionisierten Gases anhand der erfaßten Parameter und Speicherwerte.

4. Fahrzeugreifen zur Verwendung für ein Verfahren nach einem oder mehreren der vorhergehenden Ansprüche, dadurch gekenzeichnet, daß die äußere Oberfläche des Fahrzeugreifens mindestens in Teilbereichen eine Mischung aufweist, die eine unter Einwirkung eines ionisierten Gases ausgeprägte Reaktivität besitzt.
